# EUROPÄISCHE PATENTANMELDUNG

(11) **EP 4 306 026 A1**
(43) Veröffentlichungstag der Anmeldung: **17.01.2024**
(21) Anmeldenummer: 23181385.8
(22) Anmeldetag: 26.06.2023
(51) Int. Cl.: A47L 11/24, A47L 11/40

(54) **HAUSHALTSGERÄT**

(30) Priorität: 12.07.2022 DE 102022207087
(71) Anmelder: BSH Hausgeräte GmbH, 81739 München (DE)
(72) Erfinder: Grimminger, Jochen, 89407 Dillingen (DE); Hechtl, Florian, 80687 München (DE); Jürgen, Fey, 85617 Assling (DE)

(57) **Zusammenfassung**

Ein Haushaltsgerät (100) umfasst mindestens eine Kamera zur Abtastung eines Umfelds des Haushaltsgeräts (100) und zur Bereitstellung von Kamerarohdaten, einen ersten Sensor (130) zur Bereitstellung von Sensordaten basierend auf den Kamerarohdaten, einen zweiten Sensor (135) zur Bereitstellung von Sensordaten basierend auf den Kamerarohdaten, und eine Verarbeitungseinrichtung (125) zur Verarbeitung der Kamerarohdaten und/oder Sensordaten. Die Sensordaten des ersten (130) und des zweiten Sensors (135) sind unterschiedlichen Zwecken zugeordnet und die Sensoren (130, 135) weisen unterschiedliche Charakteristiken auf.

## Beschreibung

Die Erfindung betrifft ein Haushaltsgerät. Insbesondere betrifft die Erfindung ein Haushaltsgerät, das dazu eingerichtet ist, sich autonom in einem Haushalt zu steuern.

Ein Haushaltsgerät ist dazu eingerichtet, eine vorbestimmte, auf den Haushalt bezogene Aufgabe zu erfüllen, beispielsweise ein Reinigen einer Oberfläche, eines Geschirrstücks oder eines Wäschestücks. Dazu kann das Haushaltsgerät einen Sensor umfassen, der dazu eingerichtet ist, ein zu bearbeitendes Objekt oder ein Umfeld abzutasten. Die Aufgabe kann dann in Abhängigkeit der Abtastung erfüllt werden.

Es wurde vorgeschlagen, einen solchen Sensor durch eine zusätzlichen Funktion zu nutzen, die nicht notwendigerweise mit der haushaltsbezogenen Aufgabe des Haushaltsgeräts in Verbindung steht. Beispielsweise kann ein Staubsaugroboter zusätzlich als Feuermelder oder als Alarmanlage genutzt werden oder aber Videostreams zu Überwachungszwecken aufnehmen und versenden. Häufig ist die weitere Funktion mit einem Aktor an Bord des Haushaltsgeräts verbunden. So kann beispielsweise eine Warnleuchte aktiviert werden, wenn die Gefahr eines Feuers oder einer unbefugten Person im Haushalt bestimmt wurde. Der Aktor kann auf die Funktion des Sensors zurückwirken, sodass bereitgestellte Sensordaten von verringerter Qualität sein können. Eine Steuerung des Haushaltsgeräts kann daher schwieriger sein oder nur mit verringerter Präzision oder Zuverlässigkeit durchgeführt werden.

EP 3 490 417 A1 zeigt einen autonomen Staubsaugroboter mit einer ersten Kamera und einer Aufnahmevorrichtung für eine zweite Kamera. Der Staubsaugroboter wird in Abhängigkeit von Bildern der ersten Kamera gesteuert und kann Bilder der zweiten Kamera als Videodatenstrom bereitstellen.

Eine der vorliegenden Erfindung zu Grunde liegende Aufgabe besteht in der Angabe einer verbesserten Technik zur Sensornutzung an einem Haushaltsgerät. Die Erfindung löst diese Aufgabe mittels der Gegenstände der unabhängigen Ansprüche. Unteransprüche geben bevorzugte Ausführungsformen wieder.

Das hier beschriebene Haushaltgerät umfasst mindestens eine Kamera zur Abtastung eines Umfelds des Haushaltsgeräts. Die mindestens eine Kamera ist dafür eingerichtet, Kamerarohdaten bereitzustellen. Weiterhin umfasst das Hausgerät einen ersten Sensor zur Bereitstellung von Sensordaten basierend auf den Kamerarohdaten und einen zweiten Sensor zur Bereitstellung von Sensordaten basierend auf den Kamerarohdaten. Die Sensordaten des ersten Sensors können auch als erste Sensordaten und die Sensordaten des zweiten Sensors als zweite Sensordaten bezeichnet werden. Eine Verarbeitungseinrichtung des Haushaltsgeräts kann die Kamerarohdaten und/oder die Sensordaten verarbeiten. Erfindungsgemäß sind die Sensordaten des ersten und des zweiten Sensors unterschiedlichen Zwecken zugeordnet und die Sensoren weisen unterschiedliche Charakteristiken auf.

Insbesondere können die ersten Sensordaten einer Übermittlung eines Videodatenstroms an eine externe Einrichtung dienen. Vorzugsweise ist der erste Sensor dann dafür eingerichtet, ein farbiges Bild bereitzustellen. Die zweiten Sensordaten können bspw. einer Erkennung eines Objekts im Umfeld dienen. Vorzugsweise ist der zweite Sensor dann dafür eingerichtet, Bilder in Graustufen bzw. Schwarz-Weiß-Bilder bereitzustellen. Solche Bilder können bspw. mittels eines optischen Graufilters aus den Kamerarohdaten gewonnen werden.

Durch die Verwendung unterschiedlicher Sensoren für unterschiedliche Zwecke kann eine Wechselwirkung zwischen den Zwecken bzw. den in ihren Rahmen durchgeführten Verarbeitungen verhindert werden. Jede Verarbeitung für sich kann auf verbessert ungestörten Daten erfolgen und eines oder beide Verarbeitungsergebnisse können verbessert sein.

Beim Haushaltsgerät kann es sich beispielsweise um einen mobilen und/oder autonomen Reinigungsroboter, insbesondere einen Staubsaugroboter handeln.

Ein Sensor kann passiv arbeiten, indem er ein physikalisches Phänomen im Umfeld abtastet, oder aktiv, indem er das Umfeld mit einer physikalischen Prüfgröße beaufschlagt und eine Wirkung des Umfelds auf die Größe bestimmt. Beispielsweise kann eine Kamera Licht erfassen, das von einer bordeigenen Lichtquelle stammt und an einem Objekt im Umfeld reflektiert wurde, oder Licht, das von einer anderen Lichtquelle stammt. Insbesondere ein Haushaltsgerät, das auf sein Umfeld oder ein Objekt im Umfeld reagiert, kann so verbessert gesteuert werden.

Wenigstens einer der Sensoren kann Licht in einem sichtbaren Wellenlängenbereich (Spektrum) abtasten. Der Wellenlängenbereich kann nur einen Teil des sichtbaren Spektrums umfassen, außerdem kann der Bereich über das sichtbare Spektrum hinausgehen, beispielsweise in den Infrarot-Bereich. Sollte der Sensor oder das Haushaltsgerät eine Quelle zur Bestrahlung des Umfelds mit elektromagnetischer Strahlung umfassen, so kann deren Wellenlängenbereich auf den des Sensors abgestimmt sein, sodass zumindest eine partielle Überschneidung vorliegt.

Die verschiedenen Sensoren können verbessert in Abhängigkeit eines Zwecks der Verarbeitung der jeweils bereitgestellten Sensordaten ausgewählt werden. Dazu können Charakteristika der Sensoren voneinander abweichen. Die Charakteristiken können sich in wenigstens einem von einer Auflösung, einer Farbtiefe, einer Helligkeitsdynamik, einem Wellenlängenbereich, einer Verschlusszeit, einer Abtastfrequenz, einer Brennweite oder einem Messprinzip unterscheiden.

So kann sichergestellt werden, dass die Sensoren unabhängig voneinander arbeiten können. Bedingungen, die einen der Sensoren betreffen, können für den anderen Sensor nicht gelten. Beispielsweise können Helligkeiten des Umfelds für beide Sensoren unterschiedlich sein, wenn sie sich auf verschiedene Wellenlängenbereiche beziehen. Die Bedingungen für die Abtastung mittels der Sensoren können unabhängig voneinander herbeigeführt werden. Dazu kann wenigstens einer der Sensoren entsprechend eingestellt bzw. betrieben werden. Außerdem kann das Umfeld entsprechend vorbereitet werden, etwa durch eine passende Beleuchtung.

Die Auflösung kann dabei eine Anzahl Bildelemente in horizontaler und vertikaler Ebene an einem aus dem Umfeld erfassten Bild betreffen. Die Auflösung kann als Produkt dieser Werte und damit als Gesamtanzahl der Bildelemente angegeben werden. Übliche Auflösungen liegen im Bereich von mehreren 100.000 Bildelementen pro Bild oder höher. Eine geringere Auflösung kann ebenfalls vorliegen, beispielsweise bei einer Wärmebildkamera, die insbesondere als Mikrobolometer aufgebaut sein kann.

Eine Farbtiefe beschreibt eine Anzahl unterschiedlicher Messwerte, die ein Bildelement bereitstellen kann. Dabei entspricht üblicherweise ein Messwert einem vorbestimmten Abschnitt des Wellenlängenbereichs. Wird ein durch den Sensor bereitgestelltes Bild visualisiert, kann einem Messwert eine Farbe zugeordnet werden. Stimmt diese nicht mit der Farbe überein, die dem Abschnitt zugeordnet ist, so spricht man von einem Falschfarben-Bild.

Eine Helligkeitsdynamik zeigt an, wie stark sich eine minimale und eine maximale Strahlung voneinander unterscheiden können, die einen minimalen bzw. einen maximalen Messwert an einem Bildelement bewirken.

Eine Verschlusszeit betrifft die Zeit, über die elektromagnetische Strahlung gesammelt wird, um einen Messwert in einem Bildelement bereitzustellen. Übliche Verschlusszeiten liegen in Bruchteilen von Sekunden, beispielsweise 1/100 s, 1/200 s oder 1/1000 s.

Eine Abtastfrequenz beschreibt, wie häufig Messwerte durch den Sensor bereitgestellt werden können. Die maximale Abtastfrequenz ist durch den Kehrwert der minimalen Verschlusszeit beschränkt. Allerdings kann die Abtastfrequenz auch darunter liegen. Beispielsweise kann die Verschlusszeit 1/500 s betragen, während die Abtastfrequenz 1 Hz beträgt.

Die Brennweite kann bei bildgebenden Sensoren angeben, wie weit ein Öffnungswinkel ist, aus dem Licht in den Sensor einfallen kann. Die Brennweite kann bei einer üblichen Lichtkamera mittels eines Objektivs oder einer einzelnen Linse gesteuert werden.

Das Messprinzip kann beispielsweise eine Lichtkamera, eine Stereo-Kamera oder eine Tiefenkamera auf der Basis der Ausbreitungsgeschwindigkeit von Licht (time of flight, TOF Kamera) umfassen. Dabei können unterschiedliche physikalische Effekte ausgenutzt werden, um eine Abtastung durchzuführen.

Eine Charakteristik eines Sensors kann mittels eines optischen Filters bestimmt sein. Der Filter kann beispielsweise einen Wellenlängenbereich einseitig oder zweiseitig festlegen. Beispielsweise kann ein Farbfilter verwendet werden, der nur Licht einer vorbestimmten Farbe bzw. Wellenlänge passieren lässt bzw. aus den Kamerarohdaten herausfiltert. Der Filter kann bspw. einen Graufilter umfassen, sodass ein Dynamikumfang des Sensors beeinflusst ist. Weiter kann beispielsweise ein polarisierender Filter eingesetzt werden, um Spiegelungen an Glas oder feuchten Oberflächen zu reduzieren.

Die Sensordaten eines der Sensoren können einer Erkennung eines Objekts im Umfeld zugeordnet sein. Dazu kann eine Lichtkamera mit einer mittleren Brennweite, einer mittleren Auflösung und einer großen Dynamik verwendet werden. Eine Farbtiefe kann gering sein; in einer Ausführungsform kann alles erfasste Licht auf Grauwerte reduziert werden. Eine Verschlusszeit kann von untergeordneter Bedeutung sein. So kann sichergestellt sein, dass auch unter unterschiedlichen Lichtverhältnissen vergleichbare Bilder bereitgestellt werden können.

Die Sensordaten eines der Sensoren können einer kartographischen Abtastung des Umfelds zugeordnet sein. Dazu kann eine Brennweite des Sensors kurz gehalten sein, andere Charakteristika können ähnlich wie bei der Objekterkennung gewählt sein. Auf der Basis der kartografischen Abtastung kann das Haushaltsgerät seine eigene Position im Haushalt bestimmen. Ferner kann ein noch nicht kartiertes Hindernis auf einer Karte vermerkt werden oder die Position eines bereits kartierten Hindernisses kann gestützt, in Zweifel gezogen oder verändert werden. Dazu kann ein SLAM (simultaneous localisation and mapping) Algorithmus genutzt werden.

Der Zweck der Verarbeitung von Sensordaten eines der Sensoren kann eine Anwendung mit maschinenbasiertem Lernen (ML) oder künstlicher Intelligenz (KI) betreffen. Dazu können insbesondere eine Objekterkennung und/oder eine kartografische Abtastung des Umfelds zählen. Eine solche Anwendung erkennt einen auf einem Bild dargestellten Gegenstand oder eine Konstellation von Gegenständen. Das Erkennen kann vorher anhand einer Vielzahl Bildern von bekannten Gegenständen oder Konstellationen trainiert worden sein. Das Lernen und/oder Erkennen kann besser funktionieren, wenn bestimmte Eigenschaften der Bilder vergleichbar sind. Beispielsweise können die Bilder möglichst ähnliche Formate, Auflösungen, Farbtiefen, Brennweiten oder Dynamiken aufweisen. Häufig werden keine farbigen Bilder, sondern Bilder in Graustufen für ML-Anwendungen verwendet.

Die Sensordaten eines der Sensoren können der Bereitstellung eines Videodatenstroms zugeordnet sein. Der Videodatenstrom kann an eine externe Einrichtung übermittelt werden, wozu eine Schnittstelle vorgesehen sein kann. Dabei kann der Sensor dazu eingerichtet sein, ein farbiges Bild vorzugsweise mit einer hohen Auflösung bereitzustellen. Insbesondere wenn das Haushaltsgerät im Haushalt beweglich ist, kann eine kurze Verschlusszeit vorteilhaft sein, um eine Bewegungsunschärfe an einem bereitgestellten Bild gering zu halten. Eine Abtastfrequenz kann in einem mittleren Bereich liegen, beispielsweise bei ca. 25 - 50 Hz, wenn der Videodatenstrom über eine Schnittstelle mit begrenzter Bandbreite übermittelt wird, beispielsweise eine drahtlose Schnittstelle. Ist eine hohe Bandbreite möglich, beispielsweise weil der Videodatenstrom auf eine Speicherkarte geschrieben wird, kann auch eine höhere Abtastrate verwendet werden.

Das Haushaltsgerät kann dazu eingerichtet sein, sich autonom in einem Haushalt zu bewegen. Das Haushaltsgerät kann außerdem dazu eingerichtet sein, eine Bodenfläche im Haushalt zu bearbeiten, beispielsweise zu saugen, zu fegen oder zu wischen. Dabei kann das Haushaltsgerät auf eine Bearbeitung eines oder mehrerer Zimmer oder anderer vorbestimmter Bereiche im Haushalt eingeschränkt sein. Unterschiedliche Bodenflächen können unterschiedlich behandelt werden.

In einer weiteren Ausführungsform umfasst das Haushaltsgerät ferner eine Antriebseinrichtung, wobei die Verarbeitungseinrichtung dazu eingerichtet ist, die Antriebseinrichtung in Abhängigkeit von Sensordaten eines der Sensoren anzusteuern, um das Haushaltsgerät in einer vorbestimmten Weise im Haushalt zu bewegen. Die Verarbeitungseinrichtung kann insbesondere dazu eingerichtet sein, das Haushaltsgerät auf der Basis einer zu bearbeitenden Bodenfläche zu steuern. Eine Position des Haushaltsgeräts bezüglich einer Umgebungskarte kann auf der Basis der Sensorsignale festgestellt werden. Einem nicht kartografierten Hindernis kann auf der Basis der Sensorsignale ausgewichen werden.

Das Haushaltsgerät kann weiter eine Beleuchtungseinrichtung umfassen, die weiter bevorzugt durch die Verarbeitungseinrichtung gesteuert werden kann. Die Beleuchtungseinrichtung kann einen Zustand oder eine ausgeführte Funktion des Haushaltsgeräts signalisieren oder als Warnlicht eingesetzt sein, um eine Person im Haushalt auf das Haushaltsgerät aufmerksam zu machen.

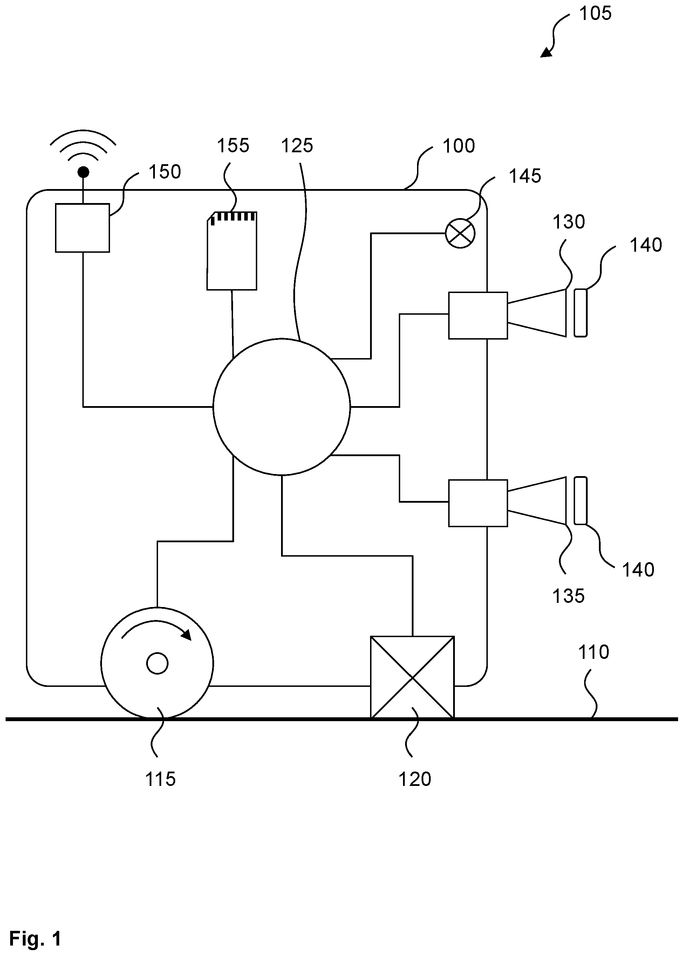

Eine nicht beschränkende Ausführungsform der Erfindung wird nun unter Bezug auf die beiliegende Figur genauer beschrieben, wobei
- Figur 1: ein Haushaltsgerät
darstellt.

Figur 1 zeigt ein Haushaltsgerät 100, das dazu eingerichtet ist, in einem Haushalt 105 eine vorbestimmte Funktion zu erfüllen. Im vorliegenden Beispiel ist das Haushaltsgerät mobil im Haushalt 105 und dazu eingerichtet, eine Bodenfläche 110 zu reinigen. Zur Bewegung über die Bodenfläche 110 umfasst das Haushaltsgerät 100 eine Antriebseinrichtung 115, die üblicherweise in Form eines Elektromotors mit einem optionalen Getriebe und einem Antriebsrad gebildet ist, und eine Bearbeitungseinrichtung 120 für die Bodenfläche 110. Die Bearbeitungseinrichtung 120 kann beispielsweise eine Saugeinrichtung, eine Anordnung zum Fegen der Bodenfläche 110 oder eine Wischeinrichtung umfassen. Es können auch mehrere Bearbeitungseinrichtungen 120 vorgesehen sein, oder eine Bearbeitungseinrichtung 120, die dazu eingerichtet ist, zu verschiedenen Bearbeitungen angesteuert zu werden.

Eine Verarbeitungseinrichtung 125 ist dazu eingerichtet, das Haushaltsgerät 100 zu steuern. Bevorzugt ist die Verarbeitungseinrichtung 125 dazu eingerichtet, verschiedene Steueraufgaben zu erledigen, die im Folgenden noch genauer beschrieben sind; in einer anderen Ausführungsform können jedoch auch mehrere Verarbeitungseinrichtungen 125 vorgesehen sein, die unterschiedlichen Aufgaben zugeordnet sind. Bevorzugt sind in diesem Fall zwei Verarbeitungseinrichtungen 125 miteinander vernetzt, um ihre Aufgaben aufeinander abzustimmen.

Ein erster Sensor 130 und ein zweiter Sensor 135 sind jeweils dazu eingerichtet, ein Umfeld des Haushaltsgeräts 100 berührungslos abzutasten. Die Sensoren 130, 135 können unterschiedliche Messprinzipien verfolgen. Bevorzugt ist wenigstens einer der Sensoren 130, 135 dazu eingerichtet, auf der Basis einer Abtastung Sensordaten bereitzustellen, die ein Bild repräsentieren. In diesem Zusammenhang kann von einem bildgebenden Sensor 130, 135 gesprochen werden.

Die Sensoren 130, 135 sind in ihren Charakteristika auf einen jeweils zugeordneten Zweck abgestimmt. Die Charakteristika können insbesondere ein Messprinzip oder Parameter eines bereitgestellten Bilds betreffen. Im Fall einer optischen Abtastung können die Charakteristika beispielsweise eine Auflösung, eine Farbtiefe, eine Helligkeitsdynamik, einen Wellenlängenbereich, eine Verschlusszeit, eine Abtastfrequenz oder eine Brennweite betreffen.

In einer Ausführungsform kann lediglich ein einziger physischer Sensor 130, 135 vorgesehen sein, der Sensordaten bereitstellt, die auf unterschiedliche Weisen verarbeitet werden, um zwei virtuelle Sensoren zu bilden, die unterschiedliche Charakteristika aufweisen. Bei diesem physischen Sensor kann es sich um eine einzige Kamera handeln, die Kamerarohdaten bereitstellt. Die Verarbeitungen können jeweils einen Informationsgehalt ursprünglich bereitgestellter Kamerarohdaten bzw. Sensordaten verringern, sodass für gute Ergebnisse eine Kamera mit guten Eigenschaften verwendet werden sollte. In einer Weiterführung kann die unterschiedliche Verarbeitung auch durch den Sensor 130, 135 erfolgen. Ein virtueller Sensor kann auch als Sensorkanal aufgefasst werden.

Die Charakteristiken eines Sensors 130, 135 können durch seine Bauart bestimmt sein. Alternativ kann ein optisches Element 140 vorgesehen sein, um die Charakteristik eines der Sensoren 130, 135 an einen gegebenen Zweck anzupassen. Das optische Element kann insbesondere einen optischen Filter umfassen, beispielsweise einen Farbfilter, einen Kantenfilter, einen Wellenlängenfilter, einen Graufilter, einen Weichzeichner oder einen Polfilter. Natürlich kann ein solcher Filter auch durch eine elektronische Schaltung oder durch Software verwirklicht sein.

Einer der Zwecke kann eine Steuerung des Haushaltsgeräts 100 umfassen, beispielsweise bezüglich der Navigation im Haushalt 105 oder bezüglich der vorbestimmten Funktion mittels der Bearbeitungseinrichtung 120. Ein anderer Zweck kann beispielsweise die Bereitstellung eines Videodatenstroms oder die Generierung von Überwachungsbildern umfassen. Optional ist eine Beleuchtungseinrichtung 145 vorgesehen, um das Umfeld des Haushaltsgeräts 100 zu beleuchten. Dies kann beispielsweise zu Signalisierungszwecken erfolgen oder so, dass einer der Sensoren eine verbesserte Abtastung des Umfelds durchführen kann. Beispielsweise kann die Beleuchtungseinrichtung 145 Licht in einem sichtbaren oder unsichtbaren Wellenlängenbereich bereitstellen. Die Beleuchtungseinrichtung 145 kann auch mit einem der Sensoren 130, 135 integriert ausgeführt sein. Handelt es sich bei einem der Sensoren 130, 135 nicht um einen Sensor, der elektromagnetische Wellen in einem anderen als dem sichtbaren Wellenlängenbereich erfasst, so kann die Beleuchtungseinrichtung 145 dazu passende elektromagnetische Strahlung bereitstellen.

Zur Bereitstellung von Daten oder Informationen können eine bevorzugt drahtlose Schnittstelle 150 und/oder ein Speicher 155 vorgesehen sein. Die drahtlose Schnittstelle 150 kann beispielsweise eine Mobilfunk-, Bluetooth- oder WLAN-Schnittstelle umfassen. Informationen können an eine vorbestimmte Basisstation, ein Endgerät eines Benutzers oder eine zentrale Stelle bereitgestellt werden, wo die Daten gespeichert oder weiter verarbeitet werden können. Der Speicher 155 kann fest eingebaut oder entnehmbar vorgesehen sein, beispielsweise in Form der dargestellten Speicherkarte 155.

Sensorsignale eines der Sensoren 130, 135 können durch die Verarbeitungseinrichtung 125 verarbeitet werden, bevor sie über die Schnittstelle 150 oder den Speicher 155 bereitgestellt werden. In einer Ausführungsform ist eine unidirektionale oder bidirektionale Übermittlung von Videodatenströmen zwischen dem Haushaltsgerät 100 und einem Nutzergerät oder einer externen Stelle vorgesehen. So kann beispielsweise ein Nutzer die Funktion des Haushaltsgeräts 100 fortlaufend überwachen. Der Nutzer kann das Haushaltsgerät 100 auch über die Schnittstelle 150 steuern, beispielsweise so, dass dieses eine vorbestimmte Position oder Perspektive im Haushalt 105 einnimmt.

### Bezugszeichen

- 100: Haushaltsgerät
- 105: Haushalt
- 110: Bodenfläche
- 115: Antriebseinrichtung
- 120: Bearbeitungseinrichtung
- 125: Verarbeitungseinrichtung
- 130: erster Sensor
- 135: zweiter Sensor
- 140: optisches Element, optischer Filter
- 145: Beleuchtungseinrichtung
- 150: Schnittstelle
- 155: Speicher, Speicherkarte

## Patentansprüche

1. Haushaltsgerät (100), umfassend:
- mindestens eine Kamera zur Abtastung eines Umfelds des Haushaltsgeräts (100) und zur Bereitstellung von Kamerarohdaten,
- einen ersten Sensor (130) zur Bereitstellung von Sensordaten basierend auf den Kamerarohdaten,
- einen zweiten Sensor (135) zur Bereitstellung von Sensordaten basierend auf den Kamerarohdaten, und
- eine Verarbeitungseinrichtung (125) zur Verarbeitung der Kamerarohdaten und/oder der Sensordaten,
- wobei die Sensordaten des ersten (130) und des zweiten Sensors (135) unterschiedlichen Zwecken zugeordnet sind, und
- die Sensoren (130, 135) unterschiedliche Charakteristiken aufweisen.

2. Haushaltsgerät (100) nach Anspruch 1, wobei wenigstens einer der Sensoren (130, 135) Licht in einem sichtbaren Wellenlängenbereich abtastet.

3. Haushaltsgerät (100) nach einem der vorangehenden Ansprüche, wobei die Sensoren (130, 135) jeweils dazu eingerichtet sind, eine bildgebende Abtastung auf der Basis elektromagnetischer Wellen durchzuführen, wobei sich die Charakteristiken in wenigstens einem von einer Auflösung, einer Farbtiefe, einer Helligkeitsdynamik, einem Wellenlängenbereich, einer Verschlusszeit, einer Abtastfrequenz, einer Brennweite oder einem Messprinzip unterscheiden.

4. Haushaltsgerät (100) nach einem der vorangehenden Ansprüche, wobei eine Charakteristik eines Sensors (130, 135) mittels eines optischen Filters (140) bestimmt ist.

5. Haushaltsgerät (100) nach einem der vorangehenden Ansprüche, wobei die Sensordaten eines der Sensoren (130, 135) einer Erkennung eines Objekts im Umfeld (105) zugeordnet sind.

6. Haushaltsgerät (100) nach einem der vorangehenden Ansprüche, wobei die Sensordaten eines der Sensoren (130, 135) einer kartographischen Abtastung des Umfelds (105) zugeordnet sind.

7. Haushaltsgerät (100) nach einem der vorangehenden Ansprüche, wobei die Sensordaten eines der Sensoren (130, 135) einer Übermittlung eines Videodatenstroms an eine externe Einrichtung zugeordnet sind.

8. Haushaltsgerät (100) nach einem der vorangehenden Ansprüche, wobei das Haushaltsgerät (100) dazu eingerichtet ist, sich autonom in einem Haushalt (105) zu bewegen.

9. Haushaltsgerät (100) nach Anspruch 8, ferner umfassend eine Antriebseinrichtung (115), wobei die Verarbeitungseinrichtung (125) dazu eingerichtet ist, die Antriebseinrichtung (115) in Abhängigkeit von Sensordaten eines der Sensoren (130, 135) anzusteuern, um das Haushaltsgerät (100) in einer vorbestimmten Weise im Haushalt zu bewegen.

10. Haushaltsgerät (100) nach einem der vorangehenden Ansprüche, ferner umfassend eine Beleuchtungseinrichtung (145).
